Europäisches Patentamt

(19) European Patent Office

Office européen des brevets

(11) Publication number : **0 489 546 A2**

(12) # EUROPEAN PATENT APPLICATION

(21) Application number : 91311058.1

(22) Date of filing : 28.11.91

(51) Int. Cl.⁵ : **G01N 21/35**

(30) Priority : 06.12.90 GB 9026579
20.09.91 GB 9120178

(43) Date of publication of application :
10.06.92 Bulletin 92/24

(84) Designated Contracting States :
BE DE FR GB IT NL

(71) Applicant : THE BRITISH PETROLEUM
COMPANY P.L.C.
Britannic House, 1 Finsbury Circus
London EC2M 7BA (GB)

(72) Inventor : Barr, John Richard McAlpine
22 Holyrood Avenue, Highfield
Southampton, Hampshire SO2 1SH (GB)

Inventor : Hanna, David Colin
346 Hill Lane, Shirley
Southampton, Hampshire SO1 2PH (GB)
Inventor : Herman, Henryk, The British
Petroleum Co. p.l.c.
Chertsey Road
Sunbury-on-Thames, Middlesex TW16 7LN
(GB)
Inventor : Stevens, David G., The British
Petroleum Co. p.l.c
Chertsey Road
Sunbury-on-Thames, Middlesex TW16 7LN
(GB)

(74) Representative : MacLeod, Malcolm et al
BP INTERNATIONAL LIMITED Patents
Division Chertsey Road
Sunbury-on-Thames Middlesex TW16 7LN
(GB)

(54) **Remote sensing system.**

(57) Apparatus for use in a moving airborne platform for detecting a target gas in the atmosphere comprises a tunable laser source, preferably a pulsed laser source, comprising a solid state laser connected to at least two tunable laser diodes for generating at least two tunable laser beams in the infra red region of the spectrum. At least one beam is tunable to the resonance frequency of the target gas and at least one beam is tunable to an off-resonance frequency of the target gas. Means are provided for directing the beams through the atmosphere to be analysed to a land or sea reflecting surface in such manner that the beams are transmitted coaxially. The beams are of such wavelengths that the on-resonance beam is attenuated by the presence of the target gas, if present in the atmosphere, and the off-resonance beam is not attenuated by the target gas. Means are provided for collecting the reflected laser radiation of wavelength absorbed by the target gas and reflected laser radiation of wavelength unabsorbed by the target gas and for generating a differential signal determined by the difference in returning energies between the reflected laser radiation of wavelength absorbed by the target gas and the reflected laser radiation of wavelength unabsorbed by the target gas.

FIG.8

EP 0 489 546 A2

This invention relates to an optical spectrometer system for detecting volatile substances such as pollutants and natural resources in the atmosphere.

The detection of anomalies in optical response due to the presence of volatile substances at, or above, marine surfaces and at, or above, land surfaces can be of great value in identifying and locating pollution phenomena and natural resources. A particularly important example of the latter is the natural seepage of hydrocarbons from subterranean reservoirs which may be either on or offshore. Incorporating optical equipment on an airborne platform for this task provides a rapid reconnaissance technique.

Offshore petroleum exploration technology, especially the use of reflection seismic, has developed to the extent that the structure and thickness of potentially oil-bearing rocks can be determined from exploration wells with a high degree of confidence. However, many areas still have either widely scattered wells or no wells at all, and in such places geochemical information may be insufficient to determine whether petroleum has been generated and its subsequent history.

In such circumstances there is a need for direct information about the occurrence of petroleum in the subsurface. The gas phase of petroleum is buoyant and has the capacity, demonstrated in several mature offshore production provinces, to breach trap seals and rise through the overburden to give flowing gassy seeps in the sea. Bubble plumes caused by gas seepage from oilfields have been reported, for example, from the North Sea, the Gulf of Mexico and offshore Brunei.

The detection of gases in the atmosphere using laser beams in the infrared region has previously been disclosed. Canadian Patent 808,760 describes the detection of hydrocarbon gases using noble gas lasers such as a helium-neon laser mounted in an aircraft. Briefly, the method comprises the use of two laser beams of slightly different wavelengths, either from the same laser or two lasers. One preselected wavelength is highly absorbed by the gas to be detected while the other is not, thereby providing differential absorption. The laser beams pass through the gas in question and are reflected back to a common detector which measures the intensity of the two beams. Any difference in the measured intensities determines the presence and quantity of the gas in question. Dust, water droplets and other light scattering materials in the atmosphere act in similar manner on the two beams and, thus, are factored out.

While such a detection scheme should, in theory, be satisfactory in determining the presence or absence of pre-selected gases, in practice, it is not, due to the restricted number of wavelengths emitted by such lasers and the number of interfering gases possibly present in the atmosphere either singly or in combination. For example, the most popular and frequently used of such lasers, the helium-neon laser, emits at several discrete wavelengths but only one of these is selective with respect to methane and none is useful for detection of other alkanes.

Other gas lasers may be substituted for the helium-neon laser to permit selective detection of other gases such as ethylene which cannot be detected satifactorily with the helium-neon laser. An article entitled "Remote Measurement of Ethylene Using a $CO_2$ Differential-Absorption Lidar" by E R Murray and J E van der Laan in Applied Optics, Volume 17 at page 814 (March 1, 1978), describes the detection of ethylene gas in the atmosphere by selective absorption of wavelengths emitted by a $CO_2$ laser.

It is known that the number of wavelengths emitted by a laser source can be increased, as well as the frequency range changed, by the use of doubling and mixing crystals. N. Menyuk and G. W. Iseler, in an article entitled "Efficient Frequency Tripling of $CO_2$ Laser Radiation in Tandem $CdGeAs_2$ Crystals", Optics Letters, Volume 4, page 55 (February, 1979), describe frequency tripling of $CO_2$ laser radiation using $CdGeAs_2$ crystals to produce second-harmonic generation in one crystal followed by sum frequency mixing of the fundamental and second harmonics in a second crystal.

However, in the use and application of such technologies for the detection of gases in an atmosphere in which a number of different gases or mixtures may be present, the need still remains for a system capable of more flexibility. For example, the $CO_2$ laser systems in use emit radiation at 80 different wavelengths in the 10 micron region. While frequency tripling techniques will provide more than 80 wavelengths in the 3000 nm region, the number of wavelengths available is still too small to provide a useful spectral match with some gases. A spectral pair is needed for each gas to be detected to measure the differential absorption signal.

Furthermore it is often necessary to have more than one pair, since some pairs may not be useful if other gases are also present. This is because some of these gases may interfere by having significant absorption coefficients wavelengths which overlap those of the target species so that it is impossible to distinguish these gases from each other.

Thus it is desirable to have a large number of wavelengths available. For example, detection of methane by itself presents little problem. However, difficulties can arise if an attempt is made to measure methane in the presence of a number of other gases, as might be the case when searching for a natural gas pipeline leak with various hydrocarbons emanating from the same source. Another example is petroleum exploration in which various other gases, such as hydrocarbons and air pollutants, are potential interferants. It would, therefore, be desirable to have a system which is continuously tunable within the 3000 to 5000 nm region.

We have now devised a system which is of particular significance for absorption analyses carried out from a moving airborne platform in which two laser beams are employed to prevent atmospheric turbulence and changes in the topographic target causing high levels of noise in the absorption signal.

Thus according to the present invention there is provided apparatus for use in a moving airborne platform for detecting a target gas in the atmosphere which apparatus comprises a tunable laser source, preferably a pulsed laser source, comprising a solid state laser connected to at least two tunable laser diodes for generating at least two tunable laser beams in the infra red region of the spectrum, at least one beam being tunable to the resonance frequency of the target gas and at least one beam being tunable to an off-resonance frequency of the target gas; means for directing the beams through the atmosphere to be analysed to a land or sea reflecting surface in such manner that the beams are transmitted coaxially; the beams being of such wavelengths that the on-resonance beam is attenuated by the presence of the target gas, if present in the atmosphere, and the off-resonance beam is not attenuated by the target gas; means for collecting the reflected laser radiation of wavelength absorbed by the target gas and reflected laser radiation of wavelength unabsorbed by the target gas; and means for generating a differential signal determined by the difference in returning energies between the reflected laser radiation of wavelength absorbed by the target gas and the reflected laser radiation of wavelength unabsorbed by the target gas.

The apparatus may be adapted to detect two or more target gases in the atmosphere by employing a tunable laser source capable of generating at least three tunable laser beams, at least one beam being tunable to the resonance frequency of one target gas, at least one beam being tunable to the resonance frequency of another target gas and at least one beam being tunable to an off-resonance frequency of the target gases.

For airborne application the timing separation between on- and off-resonance laser pulses should be less than the time constants for atmospheric changes ($<\frac{1}{2}$ millisecond) and a new topographic target falling under the beam spot (ca 6 milliseconds). Thus synchronising the two lasers offers a route to practical DIAL (Differential Absorption Lidar) from a fast moving airborne platform.

The on- and off- resonance laser pulses should be close together in wavelength to ensure that differential effects of the reflector by which significant laser light returns to the collector do not confuse the DIAL signal, and in time to ensure that the atmosphere through which these beams are transmitted is effectively "frozen" with regard to scintillation effects and changes in particulate scattering and refractive index.

The solid state laser may be a Nd:YLF, Nd:glass, Ti:sapphire, Er:YAG or alexandrite laser. However, it is preferably a Nd:YAG laser.

The means for directing the beams downwardly through the atmosphere to be analysed may comprise a phase plate, preferably a distributed random binary or tertiary phase plate.

Suitable radiation collecting means include an optical telescope.

The means for generating a differential signal determined by the difference in returning energies between the reflected laser radiation of wavelength absorbed by the target gas and the reflected laser radiation of wavelength unabsorbed by the target gas may comprise means for dividing the reflected radiation into at least two components and allowing one to pass through a cell containing a sufficiently high concentration of an appropriate gas, usually the gas to be detected, to absorb effectively all of the radiation corresponding to its component of the fraction of the total returning radiation.

Following detection, output of the signal will normally be logged and may be displayed and/or stored as desired.

Within the scope of the present invention there are many target gases which can be detected, including pollutants such as ozone, sulphur dioxide, carbon monoxide and oxides of nitrogen, and natural resources such as volatile hydrocarbons, eg light alkanes, such as methane and/or ethane.

According to another aspect of the invention there is provided a method for use in a moving airborne platform for detecting a target gas in the atmosphere which method comprises generating tunable laser beams, preferably pulsed laser beams, in the infra red region of the spectrum from a tunable laser source comprising a solid state laser connected to at least two tunable laser diodes, at least one beam being tuned to the resonance frequency of one target gas and at least one beam being tuned to an off resonance frequency of the target gas, directing the beams through the atmosphere to be analysed to a land or sea reflecting surface in such manner that the beams are transmitted coaxially; the beams being of such wavelengths that the on-resonance beam is attenuated by the presence of the target gas, if present in the atmosphere, and the off-resonance beam is not attenuated by the target gas; collecting the reflected laser radiation of wavelength absorbed by the target gas and reflected laser radiation of wavelength unabsorbed by the target gas; and generating a differential signal determined by the difference in returning energies between the reflected laser radiation absorbed by the target gas and the reflected laser radiation of wavelength unabsorbed by the target gas.

The method may be adapted for detecting two or more target gases in the atmosphere by arranging for the tunable laser source to generate at least three tunable laser beams, at least one beam being tunable to the resonance frequency of one target gas, at least one beam being tunable to the resonance frequency of another target gas and at least one beam being tunable to an off resonance frequency of the target gases.

A wide range of lasers is known, each of which emits radiation at characteristic wavelengths, and it will frequently be possible to match an appropriate laser directly with the resonance and non-resonance frequencies of the desired target gas.

However, sometimes it may not be possible to make a direct match and in such cases it will be necessary to adopt the technique of frequency conversion

For example, we have now devised frequency conversion systems, based on a Nd:YAG laser, preferably emitting at about 1,064 nm, and a tunable laser diode, preferably emitting at about 810 nm or 1550 nm, which can be employed for the production of narrow linewidth, tunable radiation at approximately 1550 and 3390 nm.

These systems are based on parametric processes and are as follows:

(1) A 810 nm tunable laser diode can be used as an injection source for an optical parametric oscillator which, when pumped by, for example, the doubled output from a fixed frequency Nd:YAG laser at 532 nm, would generate tunable radiation at approximately 1550 nm.

(2) Another method for generating of 1550 nm is to use an Er-fibre amplifier stage after a tunable 1550 nm diode to generate sufficient energy to be further amplified and converted in an optical parametric amplifier using, for example, the fixed frequency fundamental output from a Nd:YAG laser at 1064 nm as a pump.

(3) Alternatively the tunable 1550 nm diode can be used as an injection source for an optical parametric oscillator which, when pumped by, for example, the fixed frequency output from a Nd:YAG laser at 1064 nm, would generate tunable radiation at approximately 1550 nm.

In all cases, the tunable 1550 nm radiation from any of these sources is used to seed an optical parametric amplifier, pumped by say radiation at 1064 nm, and produce tunable, high powered radiation of both 1550 and 3390 nm.

(4) Another option is to use the configuration of (2) and produce both tunable 1550 nm and 3390 nm radiation directly from the optical parametric amplifier which, when pumped by, for example, the fixed frequency fundamental output from a Nd:YAG laser at 1064 nm, would generate tunable radiation near 1550 nm and 3390 nm, and filter away the 1550 nm radiation.

(5) A further option is to use the configuration of (3) and produce both tunable 1550 micron and 3390 nm radiation directly from the optical parametric oscillator which, when pumped by, for example, the fixed frequency fundamental output from a Nd:YAG laser at 1064 nm would generate tunable radiation near 1550 nm and 3390 nm, and filter away the 1550 nm radiation.

Potassium titanyl phosphate, $KTiOPO_4$, and potassium niobate, $KNbO_3$, are the preferred nonlinear optical materials used in the optical parametric oscillator or amplifier schemes. However, other nonlinear optical material can be utilised in this invention.

When two gases, for example methane and ethane are to be detected simultaneously, it may be possible to achieve this with three laser beams, not four, as one might expect. The three beams are (a) one tuned to a resonance frequency of methane ($\lambda$ = 2990.00 cm$^{-1}$, wavelength of 3.3344 $\mu$m), (b) one to a resonance frequency of ethane ($\lambda$ = 2996.85 cm$^{-1}$, wavelength of 3.3368 $\mu$m) and (c) one to a non-resonance frequency of ethane which is also chosen to be a non-resonance frequency of methane (e.g. $\lambda$ = 2997.60 cm$^{-1}$, wavelength 3.3360 $\mu$m).

A phase plate, preferably a distributed random binary or tertiary phase plate, may be present at the transmit aperture to homogenise the outgoing laser beams which may have poor original wavefront uniformity to increase coaxiality of transmission and to ensure that the return radiation has a lower variance from interaction with a non-uniform target.

The differential signal determined by the difference in returning energies between the reflected laser radiation of wavelength absorbed by the target gas and the reflected laser radiation of wavelength unabsorbed by the target gas may be obtained by a method involving the step of dividing the reflected radiation into at least two components and allowing at least one to pass through a cell containing a sufficiently high concentration of an appropriate gas to absorb effectively all of the radiation corresponding to its component of the fraction of the total returning radiation.

If, for example, two gases, eg, methane and ethane, are to be detected, the reflected radiation will be split into three components. One will be passed through a methane cell before falling on a detector, one will be passed through an ethane cell, and one will be detected without interference.

The apparatus will be simpler and lighter in weight than the apparatus currently employed for similar duties which for tunability require tuning of both the laser source and the means for shifting the wavelength. Such systems include:

1. liquid dye lasers with subsequent difference frequency mixing in crystals.

2. tunable solid state visible lasers, again with subsequent difference frequency mixing in crystals and

3. multiple gas lasers with subsequent doubling and mixing in crystals.

The overall laser system according to the present invention requires substantially less power than lasers used in the above systems and has a higher pulse energy and is more efficient and lighter.

The use of continuous wave diode technology to seed a pulsed parametric conversion process eliminates the need for complex pulse timing schemes.

The compact, lightweight nature of the source and the possibility of a robust configuration makes it suitable for use on moving land or sea-going platforms and even more so on airborne platforms, although it can be used in static locations if desired.

Applications include detecting pollutants, prospecting for gas seepages and monitoring pipelines for leak detection.

The invention is illustrated by but not limited with reference to Figures 1-9 of the accompanying drawings wherein:

Figure 1 is a diagrammatic representation of System 1

Figure 2 is a diagrammatic representation of System 2.

Figure 3 is a diagrammatic representation of System 3.

Figure 4 is a diagrammatic representation of System 4.

Figure 5 is a diagrammatic representation of System 5.

Figure 6 illustrates the wavelength choice for dual methane/ethane sensing.

Figure 7 illustrates the incorporation of three "System 3's" to produce a three-wavelength laser system.

Figure 8 is a diagrammatic representation of a system incorporating a distributed random binary phase plate.

Figure 9 is a diagrammatic representation of a radiation detecting system incorporating gas cells.

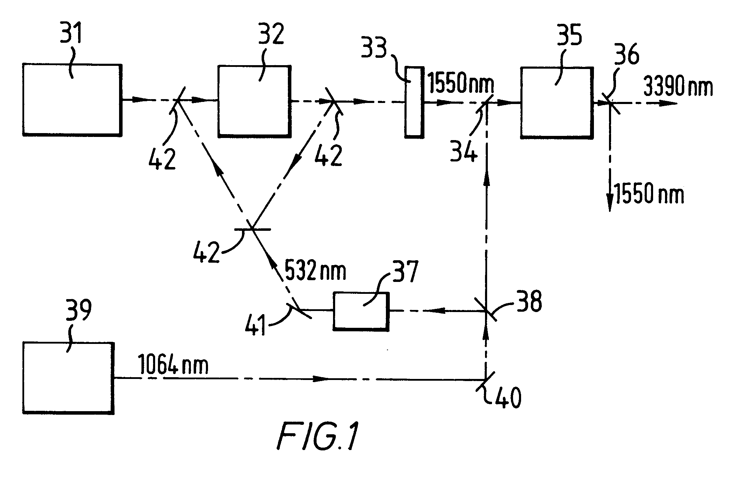

With reference to Figure 1, the primary source of radiation is an injection seeded, pulsed Nd:YAG laser (39) generating narrow band, polarised radiation at 1064 nm. Radiation from this is steered by means of a mirror (40) and then partially reflected by a beamsplitter (38) to an SHG (second harmonic generator) (37) where its wavelength is halved to 532 nm. The latter radiation is then steered by a mirror (41) and used to pump an optical parametric oscillator comprising a suitable non-linear crystal (32) (eg potassium niobate or potassium titanyl phosphate) aligned at the appropriate phase matching angle to give rise to parametric generation of radiation around 1550 nm. The optical parametric oscillator also comprises a suitable cavity, eg a travelling wave ring cavity comprising three mirrors (42), appropriate for allowing entry of the pump radiation, exit of the desired pulsed radiation around 1550 nm and entry of continuous wave seed radiation from a tunable laser diode (31) operating narrow band at around 810 nm.

The combined pulsed 532 nm and continuous wave 810 nm radiations have their polarisations adjusted in such a manner that the efficiency of the parametric processes is optimised.

The radiation from the optical parametric oscillator (32&42) is then filtered by means of an appropriate filter (33) to remove any radiation at wavelengths other than 1550 nm. The resulting narrow band, pulsed, 1550 nm radiation is then combined by means of a beam combiner (34) with narrow band, polarised radiation at 1064 nm from the beamsplitter (38). The combined 1550 nm and 1064 nm narrow band, polarised radiation is then fed into an optical parametric amplifier (35) comprising a suitable non-linear crystal (eg potassium niobate or potassium titanyl phosphate) aligned at the appropriate phase matching angle to give rise to parametric amplification of the narrow band 1550 nm radiation by the narrow band 1064 nm, with simultaneous generation of narrow band, polarised radiation at around 3390 nm.

Finally the narrow band 1550 nm and narrow band 3390 nm radiations are separated by means of a suitable dichroic beamsplitter, prism or diffraction grating (36).

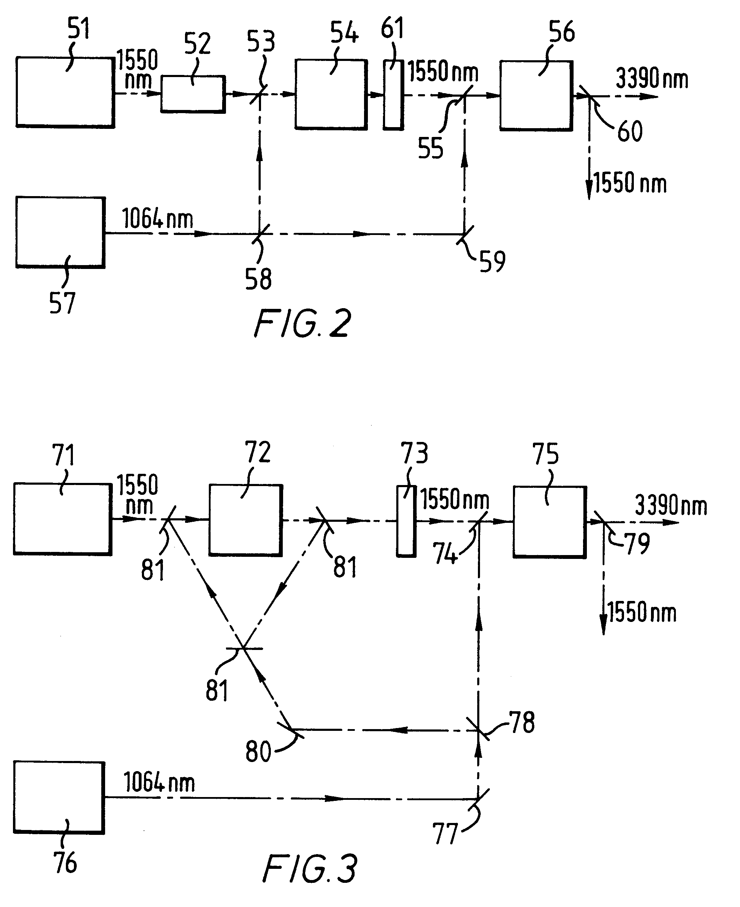

With reference to Figure 2, the primary source of radiation is an injection-seeded, pulsed Nd:YAG laser (57) generating narrow band, polarised radiation at 1064 nm. Radiation from this is partially reflected by a beamsplitter (58) and then combined by means of a beam combiner (53) with narrow band, polarised radiation at around 1550 nm from a tunable, continuous wave, laser diode (51) which has been amplified by means of a suitable amplifier (52) (eg a rare-earth (which may be erbium) doped fibre amplifier (EDFA)). The combined continuous wave 1550 nm and pulsed 1064 nm radiations have their polarisations adjusted in such manner that the efficiency of the parametric processes is optimised. They are then fed into an optical parametric amplifier (54) comprising a suitable non-linear crystal (eg potassium niobate or potassium titanyl phosphate) aligned at the appropriate phase matching angle to give rise to pulsed parametric amplification of the 1550 nm radiation by the 1064 nm, with simultaneous generation of narrow band, polarised radiation at 3390 nm. This radiation at 3390 nm is then filtered out by means of a suitable filter (61).

The resulting narrow band, pulsed, 1550 nm radiation is then combined by means of a beam combiner (55) with narrow band, polarised radiation at 1064 nm from the beamsplitter (58) which has been steered by means of a mirror (59). The combined 1550 nm and 1064 nm narrow band, polarised radiation is then fed into a second optical parametric amplifier (56) comprising a suitable non-linear crystal (eg potassium niobate or potassium titanyl phosphate) aligned at the appropriate phase matching angle to give rise to parametric amplification of the narrow band 1550 nm radiation by the narrow band 1064 nm, with simultaneous generation of narrow band, polarised radiation at around 3390 nm.

Finally the narrow band 1550 nm and narrow band 3390 nm radiations are separated by means of a suitable dichroic beamsplitter, prism or diffraction grating (60).

Alternatively, narrow band, polarised radiation at 3390 nm may be extracted immediately after (61), if (61) is a pass band filter.

With reference to Figure 3, the primary source of radiation is an injection-seeded, pulsed Nd:YAG laser (76) generating narrow band, polarised radiation at 1064 nm. Radiation from this is steered by means of a mirror (77) and then partially reflected by a beamsplitter (78). The radiation is then steered by means of a mirror (80) into an optical parametric oscillator comprising a suitable non-linear crystal (72), (eg potassium niobate or potassium titanyl phosphate) aligned at the appropriate phase matching angle to give rise to pulsed parametric generation of narrow band, polarised radiation at 1550 nm with the simultaneous generation of narrow band, polarised radiation at 3390 nm. The optical parametric oscillator also comprises a suitable cavity, eg a ring cavity comprising three mirrors (81), appropriate for allowing entry of the pump radiation, exit of the desired pulsed radiation around 1550 nm and entry of continuous wave seed radiation from a tunable laser diode (71) operating narrow band at around 1550 nm. The radiation at 3390 nm is then filtered out by means of a suitable filter (73).

The combined pulsed 1064 nm and continuous wave 1550 nm radiations have their polarisations adjusted in such manner that the efficiency of the parametric processes is optimised.

The 1550 nm output of the optical parametric oscillator (72&81) is then combined by means of a beam combiner (74) with the remaining radiation at 1064 nm from the beamsplitter (78). The combined 1550 nm and 1064 nm narrow band, polarised radiation is then fed into an optical parametric amplifier (75) comprising a suitable non-linear crystal (eg potassium niobate or potassium titanyl phosphate) aligned at the appropriate phase matching angle to give rise to parametric amplification of the narrow band 1550 nm radiation by the narrow band 1064 nm, with simultaneous generation of narrow band, polarised radiation at around 3390 nm.

Finally the narrow band 1550 nm and narrow band 3390 nm radiations are separated by means of a suitable dichroic beamsplitter, prism or diffraction grating (79).

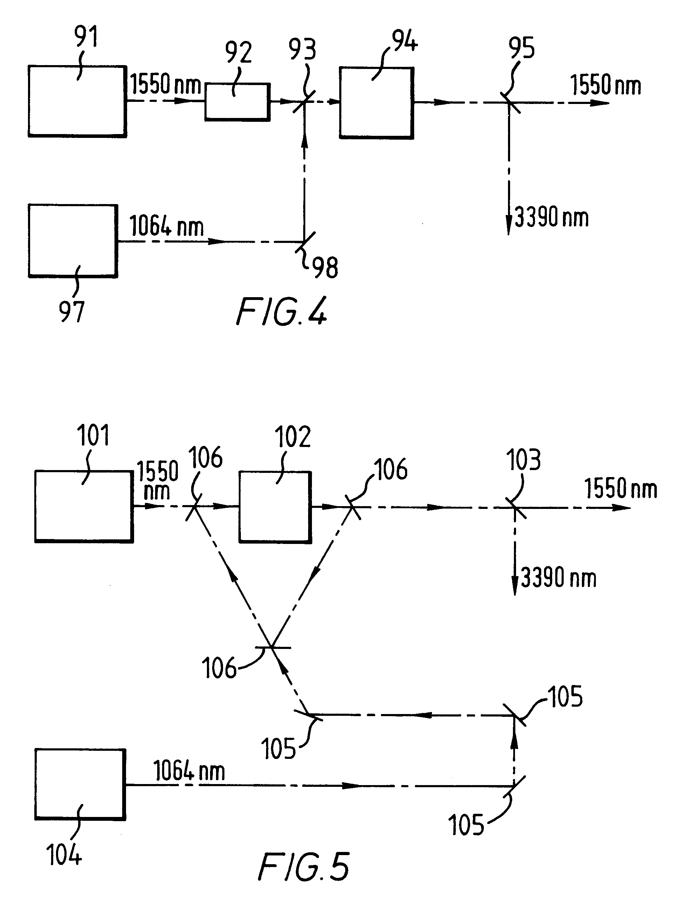

With reference to Figure 4, the primary source of radiation is an injection-seeded, pulsed Nd:YAG laser (97) generating narrow band, polarised radiation at 1064 nm. Radiation from this is steered by means of a mirror (98) and then combined by means of a beam combiner (93) with narrow band polarised radiation at around 1550 nm from a tunable, continuous wave laser diode (91) which has been amplified by means of a suitable amplifier (92) (e.g. a rare earth (which may be erbium) doped fibre amplifier (EDFA)). The combined continuous wave 1550 nm and pulsed 1064 nm radiations have their polarisations adjusted in such a manner that the efficiency of the parametric process is optimised. They are then fed into an optical parametric amplifier (94) comprising a suitable non-linear crystal (e.g. potassium niobate or potassium titanyl phosphate) aligned at the appropriate phase matching angle to give rise to pulsed parametric amplification of the 1550 nm radiation by the 1064 nm radiation, with simultaneous generation of narrow band, polarised radiation at around 3390 nm.

Finally the narrow band 1550 nm and narrow band 3390 nm radiations are separated by means of a suitable dichroic beamsplitter, prism or diffraction grating (95).

With reference to Figure 5, the primary source of radiation is an injection-seeded, pulsed Nd:YAG laser (104) generating narrow band, polarised radiation at 1064 nm. Radiation from this is steered by means of mirrors (105) into an optical parametric oscillator comprising a suitable non-linear crystal (102), (eg potassium niobate or potassium titanyl phosphate) aligned at the appropriate phase matching angle to give rise to pulsed parametric generation of narrow band, polarised radiation at 1550 nm with the simultaneous generation of narrow band, polarised radiation at 3390 nm. The optical parametric oscillator also comprises a suitable cavity, eg a ring cavity comprising three mirrors (106), appropriate for allowing entry of the pump radiation, exit of the desired pulsed radiation around 3390 nm and entry of continuous wave seed radiation from a tunable laser diode (101) operating narrow band at around 1550 nm.

The combined pulsed 1064 nm and continuous wave 1550 nm radiations have their polarisations adjusted in such manner that the efficiency of the parametric processes is optimised.

Finally the narrow band 1550 nm and narrow band 3390 nm radiations are separated by means of a suitable dichroic beamsplitter, prism or diffraction grating (103).

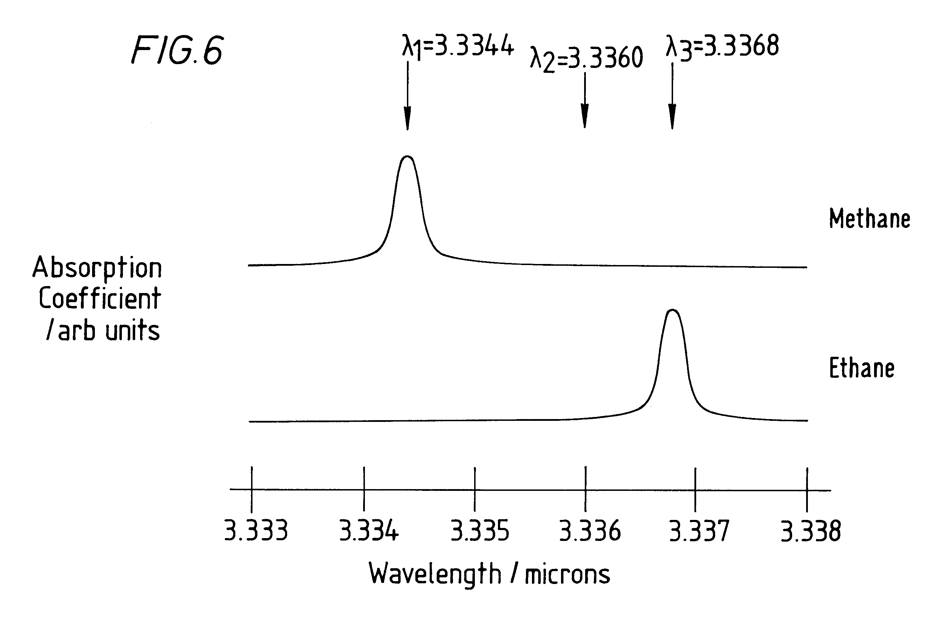

With reference to Figure 6, in order to achieve simultaneous dual gas sensing (eg methane and ethane), three wavelengths are chosen. The first wavelength is chosen to correspond with an absorption feature of the first gas (eg $\lambda_1$ = 3.3344$\mu$m for methane); the second wavelength is chosen to be close to $\lambda_1$ in order to ensure that no differential reflectance from the topographic target occurs, and at a wavelength that corresponds to neither an absorption feature of the first gas (methane) or the second gas (ethane) (eg $\lambda_2$ = 3.3360 $\mu$m); the third wavelength is chosen to correspond with an absorption feature of the second gas (eg $\lambda_3$ = 3.3368 $\mu$m).

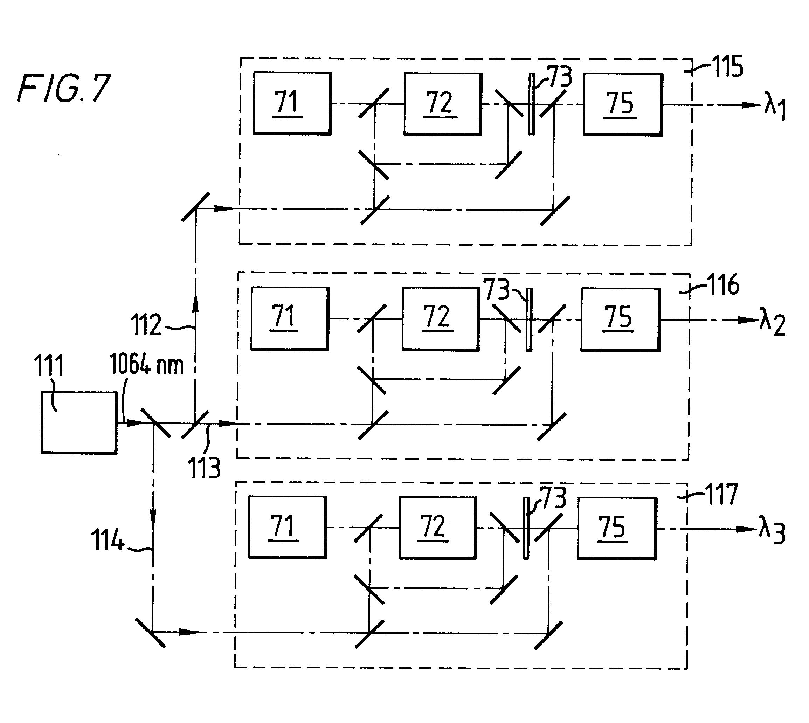

In Figure 7 radiation at 1064 nm from the primary pump source, an injection-seeded Nd:YAG laser (111), is divided into three beams of equal energy (112, 113, 114) and used to pump three down conversion chains (115, 116, 117).

The details of possible down conversion chains have been previously described with reference to Figures 1-5.

Any of these chains could be employed.

By way of a non-limiting example the use of three down chain conversion systems described with reference to Figure 3 is shown in Figure 7, although the chain has been modified slightly by putting the ring cavity in a rectangular configuration, instead of the triangular configuration of Figure 3.

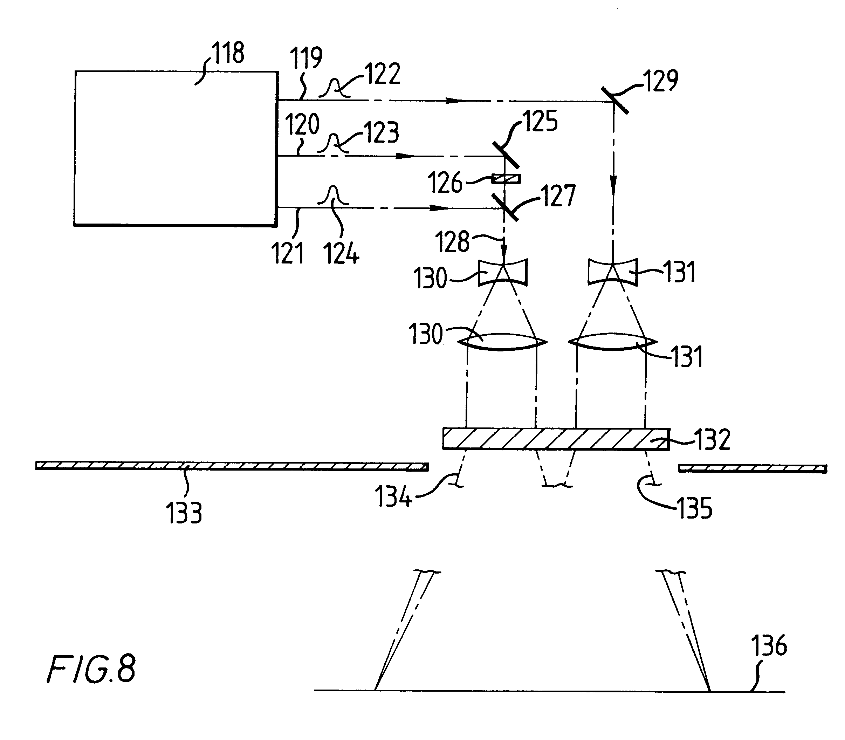

With reference to Figure 8, a laser system, (118), previously described, is employed which generates three wavelengths in the infra red region of the spectrum simultaneously by employing a single infra red pump laser to drive three separate non linear optical conversion chains. The three wavelengths (119, 120, 121) generated by the laser system (118) are temporally synchronised (122, 123, 124) but spatially separated. Since the beams are all linearly polarised, two of these, eg the second and third beams (120 and 121), may be combined by means of an appropriate beam combiner (127). The second beam (120) is redirected by a reflector (125) and its polarisation rotated by a $\frac{1}{2}$-wave plate (126)) to produce the combined beams (128) minimising the spatial separation. The third beam (119) is redirected by a reflector (129). The three beams are then expanded by means of an appropriate telescope system (130), (131) comprising appropriate infra red lenses, and then passed through a infra red transmitting binary phase plate (132) before passing through an aperture in the aircraft floor (133). The binary phase plate comprises a number (ca. 10,000) of similarly sized small circular sub apertures, the diameter of which determines the overall beam divergence. Spatial overlap between the two combined wavelengths (134) and the third wavelength (135) is maximised at the topographic target (136) by means of using a relatively high divergence (ca. 20 milli radians), a relatively long range to the target >100 metres, thus giving a topographic target footprint diameter of >2 metres, and a small spatial separation of the two combined wavelengths and the third wavelength at the binary phase plate (ca. 30 mm). If necessary even this small spatial separation can be eliminated at a specified topographic target range by means of directing either the two combined wavelengths or the third wavelength at a slight angle to the other, thus resulting in complete spatial overlap at the topographic target.

Approximately half of the 10,000 sub apertures, the precise sub apertures having been determined randomly, incorporate an appropriate optical coating to effect a $\pi$ phase shift in the output wavefront passing through the particular sub aperture. The overall effect of the phase plate is to produce a wavefront at the topographic target which when combined with the non-uniform reflectance properties of a typical topographic target result in return radiation intensities, both for successive pulses at each of the individual wavelengths, having a low variance. This variance is determined by the statistical properties of the binary phase plate and not by fluctuations in the output wavefront of the initial laser system (118), in which case (eg in the absence of a binary phase plate) it would have been significantly higher. In this way and in combination with the individual wavelength temporal overlap scheme to follow, the accuracy of the overall remote sensing system is improved. Further improvement may be possible with the use of a tertiary (or higher order) phase plate which incorporates a random pattern of circular sub apertures with appropriate coatings to produce either 0, $2\pi/3$ or $4\pi/3$ phase shift in the transmitted wavefront.

These wavelengths are then propagated simultaneously through the atmosphere, thereby experiencing precisely the same atmospheric column and topographic target.

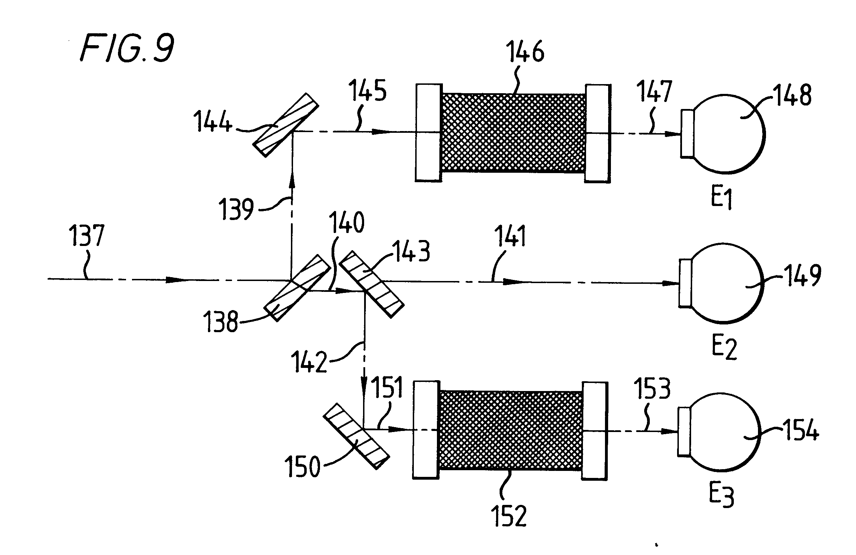

With reference to Figure 9, upon subsequent collection by a suitable optical telescope the returning radiation of total energy, $E_{TOTAL}$, wich comprises three component wavelengths in the infra red region of the spectrum, one tuned to a methane resonance and which may have been attenuated by the presence of methane in the atmospheric column under the aircraft, one tuned to an ethane resonance and which may have been attenuated by the presence of ethane in the atmospheric column under the aircraft, and one tuned to a non-resonance of both,

$$E_{TOTAL} = E(\lambda_1) + E(\lambda_2) + E(\lambda_3)$$

is then analysed by the following means. The returning radiation (137) is first divided by the partial reflector (138) into two components corresponding to one third of the total returning radiation (139) and two thirds of the returning radiation (140). The two thirds component is then divided into two equal parts (141, 142), each corresponding to one third of the original total returning radiation by means of partial reflector (143). These components are then analysed according to the following means. One of the components (139) is redirected by reflector (144) and the resultant beam (145) allowed to pass through a gas cell (146) containing a high (ca. 5%) concentration of methane sufficient to absorb effectively all of the radiation corresponding to the component (wavelength $\lambda_1$) of the fraction of the total returning radiation, $E_{TOTAL}/3$. The resulting radiation (147) is then detected and measured by an appropriate detector (148) which might be an indium antimonide detector. The measured energy,

$$E_1 = E_{TOTAL}/3 - E(\lambda_1) = E(\lambda_2)/3 + E(\lambda_3)/3.$$

Another of the components (141) is detected and measured by an appropriate detector (149) which might be an indium antimonide detector, without a passage through any such gas cell as used above, or an empty gas cell. The measured energy,

$$E_2 = E_{TOTAL}/3 = E(\lambda_1)/3 + E(\lambda_2)/3 + E(\lambda_3)/3.$$

The third of the components is redirected by a reflector (150) and the resultant beam (151) allowed to pass through a gas cell (152) containing a high (ca. 5%) concentration of ethane sufficient to absorb effectively all of the radiation corresponding to the component (wavelength $\lambda_3$) of the fraction of the total returning radiation, $E_{TOTAL}/3$. The resulting radiation (153) is then detected and measured by an appropriate detector (154) which might be an indium antimonide detector. The measured energy,

$$E_3 = E_{TOTAL}/3 - E(\lambda_3) = E(\lambda_1)/3 + E(\lambda_2)/3.$$

From the above measurements of energies, $E_1$, $E_2$ and $E_3$, the returning radiation at each of the component wavelengths $\lambda_1$, $\lambda_2$, $\lambda_3$ are calculated as follows,

$$E(\lambda_1) = 3E_2 - 3E_1,$$
$$E(\lambda_2) = 3E_1 + 3E_3 - 3E_2,$$
$$E(\lambda_3) = 3E_2 - 3E_3.$$

The differential absorptions between the wavelenths $\lambda_1$ and $\lambda_2$, and $\lambda_3$ and $\lambda_2$ can then be used to deduce the average concentrations in the atmosphere of the gases of interest.

## Claims

1. Apparatus for use in a moving airborne platform for detecting a target gas in the atmosphere characterised by the fact that the apparatus comprises a tunable laser source comprising a solid state laser connected to at least two tunable laser diodes for generating at least two tunable laser beams in the infra red region of the spectrum, at least one beam being tunable to the resonance frequency of the target gas and at least one beam being tunable to an off-resonance frequency of the target gas; means for directing the beams through the atmosphere to be analysed to a land or sea reflecting surface in such manner that the beams are transmitted coaxially; the beams being of such wavelengths that the on-resonance beam is attenuated by the presence of the target gas, if present in the atmosphere, and the off-resonance beam is not attenuated by the target gas; means for collecting the reflected laser radiation of wavelength absorbed by the target gas and reflected laser radiation of wavelength unabsorbed by the target gas; and means for generating a differential signal determined by the difference in returning energies between the reflected laser radiation of wavelength absorbed by the target gas and the reflected laser radiation of wavelength unabsorbed by the target gas.

2. Apparatus according to claim 1 for detecting two or more target gases in the atmosphere characterised by the fact that the tunable laser source is capable of generating at least three tunable laser beams, at least one beam being tunable to the resonance frequency of one target gas, at least one beam being tunable to the resonance frequency of another target gas and at least one beam being tunable to an off-resonance frequency of the target gases.

3. Apparatus according to either of the preceding claims characterised by the fact that the laser is a pulsed laser.

4. Apparatus according to any of the preceding claims characterised by the fact that the laser is a Nd:YAG, Nd:YLF, Nd:glass, Ti:sapphire, Er:YAG or alexandrite laser.

5. Apparatus according to any of the preceding claims characterised by the fact that the means for directing the beams through the atmosphere to be analysed to a reflecting surface in such manner that the beams are transmitted coaxially is a phase plate.

6. Apparatus according to any of the preceding claims characterised by the fact that the means for collecting the reflected radiation is an optical telescope.

7. Apparatus according to any of the preceding claims characterised by the fact that the means for generating a differential signal determined by the difference in returning energies between the reflected laser radiation of wavelength absorbed by the target gas and the reflected laser radiation of wavelength unabsorbed by the target gas comprises means for dividing the reflected radiation into at least two components and allowing at least one to pass through a cell containing a sufficiently high concentration of an appropriate gas to absorb effectively all of the radiation corresponding to its component of the fraction of the total returning radiation.

8. A method for use in a moving airborne platform for detecting a target gas in the atmosphere characterised by the fact that the method comprises generating tunable laser beams in the infra red region of the spectrum from a tunable laser source comprising a solid state laser connected to at least two tunable laser diodes, at least one beam being tuned to the resonance frequency of a target gas and at least one beam being tuned to an off resonance frequency of the target gas, directing the beams through the atmosphere to be analysed to a land or sea reflecting surface in such manner that the beams are transmitted coaxially; the beams being of such wavelengths that the on-resonance beam is attenuated by the presence of the target gas, if present in the atmosphere, and the off-resonance beam is not attenuated by the target gas; collecting the reflected laser radiation of wavelength absorbed by the target gas and reflected laser radiation of wavelength unabsorbed by the target gas; and generating a differential signal determined by the difference in returning energies between the reflected laser radiation absorbed by the target gas and the reflected laser radiation of wavelength unabsorbed by the target gas.

9. A method according to claim 8 for detecting two or more target gases in the atmosphere characterised by the fact that the tunable laser source generates at least three tunable laser beams, at least one beam being tunable to the resonance frequency of one target gas, at least one beam being tunable to the resonance frequency of another target gas and at least one beam being tunable to an off-resonance frequency of the target gases.

10. A method according to either of claims 8 or 9 characterised by the fact that the tunable laser beams are pulsed laser beams.

11. A method according to any of claims 8 to 10 characterised by the fact that the laser is a Nd:YAG, Nd:YLF, Nd:glass, Ti:sapphire, Er:YAG or alexandrite laser.

12. A method according to claim 11 characterised by the fact that the Nd:YAG laser emits at approximately 1064 nm and the tunable laser diodes emit at approximately 810 or 1550 nm for the production of narrow linewidth, tunable radiation at approximately 1550 and 3390 nm.

13. A method according to claim 12 characterised by the fact that the 810 nm tunable laser diode is used as an injection source for an optical parametric oscillator which is pumped by the doubled output from a fixed frequency Nd:YAG laser at 532 nm to generate tunable radiation at approximately 1550 nm.

14. A method according to claim 12 characterised by the fact that 1550 nm radiation from the tunable laser diode is amplified by an Er-fibre amplifier and further amplified and converted in an optical parametric amplifier using the fixed frequency output from a Nd:YAG laser at 1064 nm as a pump.

15. A method according to claim 12 characterised by the fact that the tunable laser diode is used as an injection source for an optical parametric oscillator which is pumped by the fixed frequency output from a Nd:YAG laser at 1064 nm to generate tunable radiation at approximately 1550 nm.

16. A method according to any of claims 8 to 15 characterised by the fact that the beams are passed through a phase plate before being directed through the atmosphere to be analysed to increase coaxiality of transmission and to reduce the variance of the returning radiation from interaction with a non-uniform target.

17. A method according to any of claims 8 to 16 characterised by the fact that the differential signal determined by the difference in returning energies between the reflected laser radiations of wavelength absorbed by the target gas and the reflected laser radiation of wavelength unabsorbed by the target gas is obtained by a method involving the step of dividing the reflected radiation into at least two components and allowing at least one to pass through a cell containing a sufficiently high concentration of an appropriate gas to absorb effectively all of the radiation corresponding to its component of the fraction of the total returning radiation.

FIG.1

51   1550 nm   52   53   54   61   1550 nm   56   3390 nm

55   60

57   1064 nm   58   59   1550 nm

**FIG.2**

71   1550 nm   72   73   1550 nm   75   3390 nm

81   81   74   79

81   1550 nm

80   78

76   1064 nm   77

**FIG.3**

FIG.4

FIG.5

FIG.6

$\lambda_1=3.3344$  $\lambda_2=3.3360$  $\lambda_3=3.3368$

Methane

Absorption
Coefficient
/arb units

Ethane

3.333  3.334  3.335  3.336  3.337  3.338

Wavelength / microns

EP 0 489 546 A2

FIG.7

EP 0 489 546 A2

FIG.8

FIG.9